# EUROPÄISCHE PATENTSCHRIFT

(11) **EP 0 544 155 B1**
(45) Veröffentlichungstag und Bekanntmachung des Hinweises auf die Patenterteilung: **27.12.1996**
(21) Anmeldenummer: 92119370.2
(22) Anmeldetag: 12.11.1992
(51) Int. Cl.: A63F 9/22, H04N 5/645, G06F 1/16

(54) **Schwenkbare Bildschirmröhre für Video-Spielgeräte**
Rotatable monitor tube for video game apparatuses
Moniteur cathodique pivotable pour appareils de jeux vidéo

(30) Priorität: 25.11.1991 DE 4138638
(43) Veröffentlichungstag der Anmeldung: 02.06.1993
(73) Patentinhaber: NSM AKTIENGESELLSCHAFT, 55411 Bingen (DE)
(72) Erfinder: Niederlein, Horst, W-6530 Bingen (DE)
(74) Vertreter: Becker, Bernd, Dipl.-Ing.

(56) Entgegenhaltungen:
- EP-A- 0 230 291
- EP-A- 0 351 817
- DE-A- 3 309 367
- GB-A- 2 076 249

## Beschreibung

Die Erfindung bezieht sich auf ein Video-Spielgerät mit einer zur hoch- oder querformatigen Bilddarstellung um 90° verdrehbar gehalterten Bildschirmröhre, die durch eine Spieiplatine steuerbar ist, wobei die Bildschirmröhre in der Bildebene in einem verschwenkbaren Träger festgelegt ist, der sich außenseitig auf einer mit einem Antriebsmotor oder mit einem Handantrieb angetriebenen Treibrolle abstützt.

Bei derartigen Video-Spielgeräten weist die Spielplatine die erforderlichen Informationen auf, damit ein bestimmtes Spiel auf der Bildschirmröhre wiedergegeben und ausgeführt werden kann. Hierbei sind einige Spiele, wie beispielsweise Raumfahrtspiele, im Hochformat darzustellen, während eine andere Gruppe von Spielen sich besser für eine Darstellung im Querformat der Bildschirmröhre eignet. Entweder müssen für jede Spielgruppe unterschiedliche Geräte verwendet werden oder ein Monteur muß die entsprechende Ausrichtung der Bildschirmröhre des Gerätes vornehmen. Um diesen Nachteil zu beseitigen, ist bereits aus der DE-A-35 33 443 ein Video-Spielgerät mit Münzeinwurf bekannt, das mit einer um 90° verdreh- oder verschwenkbar gehalterten und durch eine Spielplatine gesteuerten Bildschirmröhre ausgerüstet und mit einem Bedienelemente tragenden Bedienpult versehen ist, wobei die Bildschirmröhre über einen motorgetriebenen Drehantrieb verschwenkbar ist. Eine rohrförmige Halterung nimmt die Bildschirmröhre auf, an der die Bildschirmröhre an vier Punkten befestigt ist. Die Halterung ist rückseitig in einem an der Rückwand des Gehäuses des Video-Spielgerätes angebrachten Lager drehbar gelagert. Über einen ebenfalls an der Rückwand des Gehäuses angebrachten motorischen Antrieb kann die Halterung um 90° von einer zur anderen Lage verschwenkt werden. Anstelle der rohrförmigen Halterung kann auch eine spinnenförmige Halterung aus vier Rohren mit an den vorderen Enden angebrachten Vierecklaschen zur Aufnahme der Bildschirmröhre zur Anwendung kommen. In beiden Fällen muß aufgrund der Hebelwirkung der Bildschirmröhre auf die Lagerung der Halterung diese relativ groß und stabil ausgeführt sein, was mit einem besonderen konstruktiven Aufwand verbunden ist. Darüber hinaus bedingt die Halterung, da sie die Bildschirmröhre vollständig umgibt, einen verhältnismäßig großen Einbauraum.

Des weiteren ist aus der EP-A-0 230 291 ein Video-Spielautomat mit einem Gehäuse bekannt, in dem sich eine Bedienungsarmatur, mindestens ein Lautsprecher und mindestens eine Bildröhre sowie eine elektronische und elektrische Schaltung und gegebenenfalls ein Münzautomat befinden. Die Bildröhre ist in ihrer Bildebene mittels eines ansteuerbaren Motors schwenkbar gelagert und läßt sich mit Hilfe des Motors entsprechend der einstellbaren Position eines Programmwahlschalters und dem damit ausgewählten Programm (Spiel) in die diesem Programm entsprechende Position schwenken. Hierzu ist die Bildröhre mit einem ringförmigen auf vier über den Umfang verteilten Rollen gelagerten Rahmen mittels einer auf den äußeren Rand des Rahmens einwirkbaren Andruckrolle des ansteuerbaren Getriebemotors drehbar ausgebildet. Da der ringförmige Rahmen zum einen den Bildschirm vollständig umgibt und zum anderen außenseitig auf vier Rollen drehbar gelagert ist, benötigt die Einrichtung zur Drehung des Bildschirms insgesamt viel Einbauraum.

Ferner ist aus der EP-A-351 817 eine Vorrichtung mit einer zur hoch- oder querformatigen Bilddarstellung um 90° in einem Gehäuse verdrehbar gehalterten Bildschirmröhre bekannt, wobei die Bildschirmröhre in einem in Führungslagern verschwenkbaren Tragbügel gehalten ist. Der Tragbügel ist exzentrisch, d.h. mit verschiedenen Mittelpunkten ausgebildet. Hierbei ist der Abstand von der Drehachse der Bildschirmröhre zu dem Tragbügel an der längeren Seite verschieden von dem Abstand zwischen der Drehachse und dem Tragbügel an der kürzeren Seite der Bildschirmröhre. An der Rückseite der Bildschirmröhre ist in der Drehachse ein Zapfen befestigt, der eine Scheibe trägt, die sich auf einer mit einem Antriebsmotor verbundenen Treibrolle abstützt.

Der Erfindung liegt die Aufgabe zugrunde, ein Video-Spielgerät der eigangs genannten Art zu schaffen, das in kompakter Bauweise eine Einstellung der rechteckförmigen Bildschirmröhre im Hoch- oder Querformat, den leichten Einsatz von Bildschirmröhren unterschiedlicher Größe und den richtigen Blickwinkel auf die Bildschirmröhre ermöglicht.

Diese Aufgabe wird erfindungsgemäß dadurch gelöst, daß der Träger der Bildschirmröhre viertelkreisförmig ausgebildet und in seiner Neigung zur Vertikalen verstellbar und/oder horizontal verdrehbar ist.

Durch diese Maßnahmen wird für die Einrichtung zur Verschwenkung der Bildschirmröhre innerhalb des Gehäuses des Video-Spielgerätes nur wenig Raum beansprucht, wodurch das Video-Spielgerät insgesamt kompakter ausgeführt werden kann. Darüber hinaus ermöglicht der viertelkreisförmige Träger die Aufnahme von Bildschirmröhren unterschiedlicher Größe, da er die Bildschirmröhre nur in einem Teilbereich umgibt. Die Verstellbarkeit bzw. Verdrehbarkeit des Trägers ermöglicht es, dem Spieler stets den richtigen Blickwinkel auf die Bildschirmröhre zu gewähren. Durch die Auswahl eines Spiels mittels eines Auswahlschalters erfolgt über eine Steuerung bei Verwendung eines Antriebsmotors automatisch die Einstellung einer zugehörigen Position der Bildschirmröhre im Hoch- oder Querformat, die durch das ausgewählte Spiel bedingt wird.

Zur Erzielung einer einfachen Abstützung des Trägers in der horizontalen Ebene sind nach einer vorteilhaften Weiterbildung des Erfindungsgegenstandes die Enden des viertelkreisförmigen Trägers mit einer mehrfach abgewinkelten, sich über die Tiefe der Bildschirmröhre erstreckenden Halterung verbunden, die in einem ortsfesten, in der Drehachse der Bildschirmröhre liegenden Lager gelagert ist.

Weiterhin ist bevorzugt vorgesehen, daß an von der Innenseite des Trägers abgehenden Stegen der Halterung jeweils eine endseitig abgewinkelte, sich über die zugehörige Kantenlänge der Bildschirmröhre erstreckende Traglasche befestigt ist. Hierdurch ergibt sich eine sichere Aufnahme der Bildschirmröhre innerhalb des Trägers. Zweckmäßigerweise ist die Aufnahmebreite der Traglaschen für die Bildschirmröhre veränderbar. Somit sind auf einfache Weise Bildschirmröhren unterschiedlicher Größe an dem Träger zu befestigen.

Damit ein zuverlässiger Antrieb des Trägers gewährleistet ist, sind nach einer vorteilhaften Weiterbildung der Erfindung mehrere nebeneinanderliegende Treibrollen auf einer gemeinsamen Welle drehfest angeordnet, auf der ein Zahnrad sitzt, das in ein auf der Welle des Antriebsmotors befestigtes Ritzel eingreift.

Nach einer weiteren vorteilhaften Ausgestaltung der Erfindung ist der die Bildschirmröhre aufnehmende Träger mit seiner Halterung und seiner Antriebseinheit in einem gehäuseartigen Gestell untergebracht. Hierdurch ist eine Vormontage der Einrichtung zur Verschwenkung der Bildschirmröhre möglich, die lediglich in das Gehäuse des Video-Spielgerätes einzusetzen ist. Bevorzugt trägt hierbei der parallel zu der Rückseite der Bildschirmröhre verlaufende Steg der Halterung einen in der Drehachse der Bildschirmröhre angeordneten Lagerzapfen, der in das an der Rückwand des Gestells angebrachte Lager eingreift.

Zur Endpositionierung der Schwenkbewegung des Trägers ist nach einer Weiterbildung der Erfindung der parallel zu der Rückwand des Gestells verlaufende Abschnitt eines sich von dem Bereich des Lagers aus zu dem Träger erstreckenden Steges der Halterung mit einem vorstehenden Zapfen verbunden, der in ein entsprechend kreisbogenförmig ausgebildetes Langloch in der Rückwand eingreift, wobei die Enden des Langloches als Anschläge für den Zapfen zur Begrenzung der Schwenkbewegung der Bildschirmröhre dienen.

Zur Realisierung einer einfachen Neigungsverstellung der Bildschirmröhre ist bei einer vorteilhaften Ausgestaltung des Erfindungsgegenstandes der Boden des Gestells auf einer in Richtung der Drehachse der Bildschirmröhre verlaufenden, selbsthemmenden Wippe befestigt. Zweckmäßigerweise ist hierbei die Wippe horizontal schwergängig verdrehbar. Dies gewährleistet eine einfache Horizontal-Verstellung der Bildschirmröhre.

Der der Erfindung zugrundeliegende Gedanke wird in der nachfolgenden Beschreibung anhand eines Ausführungsbeispieles, das in der Zeichnung dargestellt ist, näher erläutert. Es zeigt:
- Fig. 1: eine Vorderansicht einer um Ihre Achse verschwenkbaren Bildschirmröhre, die in ein nicht dargestelltes Video-Spielgerät eingesetzt ist,

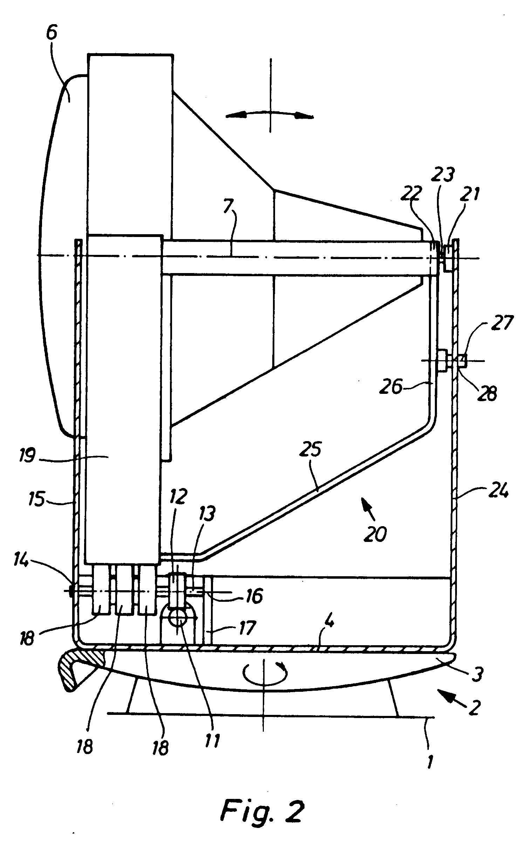

- Fig. 2: eine Seitenansicht der Darstellung nach Fig. 1,
- Fig. 3: eine Ansicht der Darstellung nach Fig. 1, jedoch mit querformatiger Lage der Bildchirmröhre und

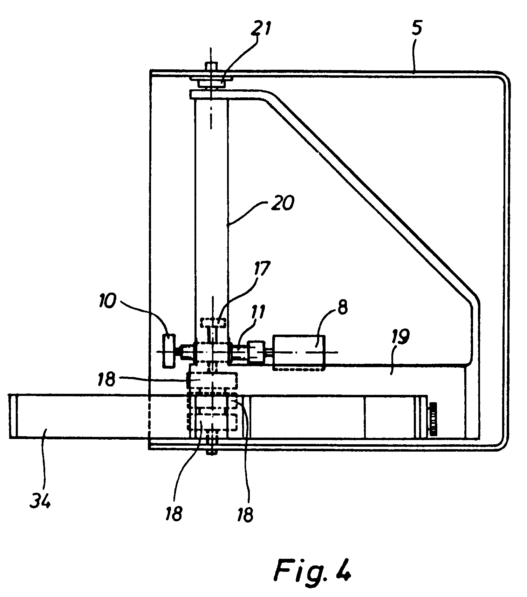

- Fig. 4: eine Draufsicht auf die Darstellung nach Fig. 3, jedoch ohne Bildschirmröhre.

Auf einer innerhalb eines nicht darstellten Gehäuses eines Video-spielgerätes angebrachten Stützplatte 1 ist eine selbsthemmende, horizontal verdrehbare Wippe 2 angeordnet, deren Wipp-Platte 3 fest mit dem Boden 4 eines gehäuseartigen Gestells 5 für die Aufnahme einer rechteckförmigen Bildschirmröhre 6 verbunden ist. Die Wippe 2 ist in Richtung der Achse 7 der Bildschirmröhre 6 ausgerichtet, so daß die Bildschirmröhre 6 in ihrer Neigung zur Vertikalen veränderbar ist. Die Wipp-Platte 3 der Wippe 2 ist schwergängig verdrehbar, wodurch die Bildschirmröhre 6 ebenfalls horizontal verdrehbar ist.

Im Innern des Gestells 5 befindet sich auf dem Boden 4 desselben ein Antriebsmotor 8, dessen Welle 9 zusätzlich in einem auf dem Boden 4 angeordneten Lager 10 gehaltert ist. Auf der Welle 9 sitzt drehfest ein Ritzel 11, das mit einem Zahnrad 12 kämmt. Dieses Zahnrad 12 sitzt drehfest auf einer rechtwinklig zu der Welle 9 des Antriebsmotors 8 verlaufenden Welle 13. Das eine Lager 14 der Welle 13 ist in der Vorderwand 15 des Gestells 5 und das andere Lager 16 der Welle 13 in einer auf dem Boden 4 des Gestells 5 angeordneten Stütze 17 aufgenommen. Zwischen der Vorderwand 15 des Gestells 5 und dem Zahnrad 12 trägt die Welle 13 drehfest drei nebeneinanderliegende Treibräder 18 gleichen Durchmessers. Auf den Treibrädern 18 stützt sich mit seiner Außenseite ein viertelkreisförmiger Träger 19 ab, von dessen Enden eine mehrfach abgewinkelte, sich über die Tiefe der Bildschirmröhre 6 erstreckende Halterung 20 abgeht. Ein in der Drehachse 7 der Bildschirmröhre 6 liegendes, ortsfestes Lager 21 nimmt das dem Träger 19 gegenüberliegende Ende der Halterung 20 drehbar auf. Hierzu ist an dem parallel zu der Rückseite der Bildschirmröhre 6 verlaufenden Steg 22 der Halterung 20 ein Lagerzapfen 23 befestigt, der in das an der Innenseite der Rückwand 24 des Gestells 5 angeordnete Lager 21 eingesetzt ist. Der von dem Steg 22 abgehende, nicht in der Drehachse 7 der Bildschirmröhre 6 liegende Steg 25 zu dem Träger 19 weist einen parallel zu der Rückwand 24 des Gestells 5 verlaufenden Abschnitt 26 auf, der einen in Richtung der Rückwand 24 vorstehenden Zapfen 27 trägt. Dieser Zapfen 27 greift in ein entsprechend viertelkreisbogenförmig ausgebildetes Langloch 28 in der Rückwand 24 ein. Die Enden des Langloches 28 dienen als Anschläge für den Zapfen 27 zur Begrenzung der 90°-Verschwenkung der Halterung 20 und damit des Trägers 19.

Von den Enden des viertelkreisförmigen Trägers 19 gehen auf dessen Innenseite zwei rechtwinklig zueinander verlaufende Stege 29, 30 der Halterung 20 ab, an denen eine Winkellasche 31 mit ihren abgekröpften Enden befestigt ist, wobei die Abwinklung der Winkellasche 31 an der Innenseite des Trägers 19 anliegt. Jedes abgekröpfte Ende der Winkellasche 31 nimmt über eine entsprechend ausgebildete Schraubverbindung 32 längenverstellbar eine endseitig abgewinkelte Haltelasche 33 auf. Jede Haltelasche 33 bildet mit dem zugehörigen Teil der Winkellasche 31 eine Traglasche 34 für die Aufnahme des entsprechenden Kantenbereiches der Bildschirmröhre 6, d.h. die Traglaschen 34 schließen zwei aneinander angrenzende unterschiedliche Kantenlängen der Bildschirmröhre 6 ein und halten somit die Bildschirmröhre 6 unverrückbar fest.

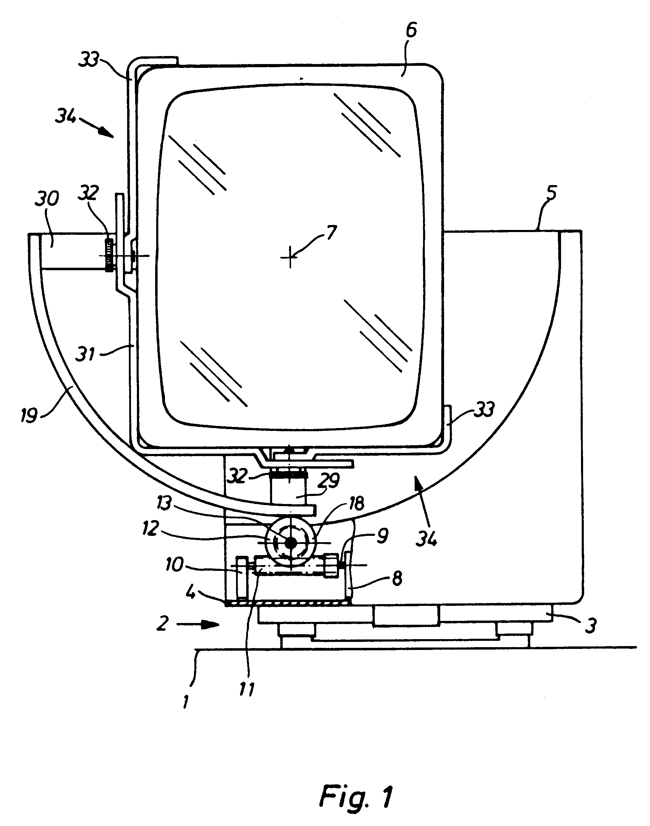

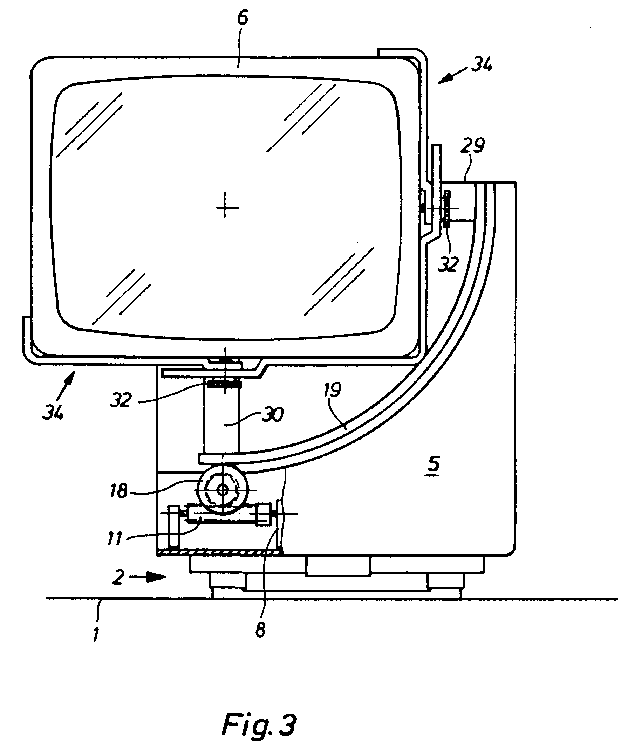

Sobald der Antriebsmotor 8 mit einer Spannung beaufschlagt wird, übertragen die Treibräder 18 ihre Drehkraft auf den viertelkreisförmigen Träger 19, und die Bildschirmröhre 6 führt somit eine Schwenkbewegung um einen Winkel von 90° aus, so daß die Bildschirmröhre 6 ihre Position von einem Hoch- (Fig. 1) in ein Querformat (Fig. 3) oder umgekehrt ändert. Hierfür wird nur ein verhältnismäßig kleiner Freiraum innerhalb des Gehäuses des Video-Spielgerätes benötigt.

Die vorstehende Zeichnungsbeschreibung hat die besonders einfache und praktisch zu handhabende Konstruktion der Einrichtung zur Verschwenkung der Bildschirmröhre eines Video-Spielgerätes, die sich unbeschadet ihrer Einfachheit und Kompaktheit gleichwohl als äußerst zuverlässig erweist, in ihren Einzelheiten verdeutlicht. Obwohl die Erfindung nur an einem Ausführungsbeispiel beschrieben wurde, ergeben sich für den Fachmann naheliegende Abwandlungen der erfindungsgemäßen Lösung, die sich aus dieser Darstellung ergeben, jedoch im Rahmen der Ansprüche liegen.

## Patentansprüche

1. Video-Spielgerät mit einer zur hoch- oder querformatigen Bilddarstellung um 90° verdrehbar gehalterten Bildschirmröhre (6), die durch eine Spielplatine steuerbar ist, wobei die Bildschirmröhre (6) in der Bildebene in einem verschwenkbaren Träger (19) festgelegt ist, der sich außenseitig auf einer mit einem Antriebsmotor (8) oder mit einem Handantrieb angetriebenen Treibrolle (18) abstützt, dadurch gekennzeichnet, daß der Träger (19) der Bildschirmröhre (6) viertelkreisförmig ausgebildet und in seiner Neigung zur Vertikalen verstellbar und/oder horizontal verdrehbar ist.

2. Video-Spielgerät nach Anspruch 1, dadurch gekennzeichnet, daß die Enden des viertelkreisförmigen Trägers (19) mit einer mehrfach abgewinkelten, sich über die Tiefe der Bildschirmröhre (6) erstreckenden Halterung (20) verbunden sind, die in einem ortsfesten, in der Drehachse (7) der Bildschirmröhre (6) liegenden Lager (21) gelagert ist.

3. Video-Spielgerät nach den Ansprüchen 1 und 2, dadurch gekennzeichnet, daß an von der Innenseite des Trägers (19) abgehenden Stegen (29, 30) der Halterung (20) jeweils eine endseitig abgewinkelte, sich über die zugehörige Kantenlänge der Bildschirmröhre (6) erstreckende Traglasche (34) befestigt ist.

4. Video-Spielgerät nach Anspruch 3, dadurch gekennzeichnet, daß die Aufnahmebreite der Traglaschen (34) für die Bildschirmröhre (6) veränderbar ist.

5. Video-Spielgerät nach einem der Ansprüche 1 bis 4, dadurch gekennzeichnet, daß mehrere nebeneinanderliegende Treibrollen (18) auf einer gemeinsamen Welle (13) drehfest angeordnet sind, auf der ein Zahnrad (12) sitzt, das in ein auf der Welle des Antriebsmotors (8) befestigtes Ritzel (11) eingreift.

6. Video-Spielgerät nach einem der Ansprüche 1 bis 5, dadurch gekennzeichnet, daß der die Bildschirmröhre (6) aufnehmende Träger (19) mit seiner Halterung (20) und seiner Antriebseinheit in einem gehäuseartigen Gestell (5) untergebracht ist.

7. Video-Spielgerät nach einem der Ansprüche 1 bis 6, dadurch gekennzeichnet, daß der parallel zu der Rückseite der Bildschirmröhre (6) verlaufende Steg (26) der Halterung (20) einen in der Drehachse (7) der Bildschirmröhre (6) angeordneten Lagerzapfen (23) trägt, der in das an der Rückwand (24) des Gestells (5) angebrachte Lager (21) eingreift.

8. Video-Spielgerät nach einem der Ansprüche 1 bis 7, dadurch gekennzeichnet, daß der parallel zu der Rückwand (24) des Gestells (5) verlaufende Abschnitt (26) eines sich von dem Bereich des Lagers (21) aus zu dem Träger (19) erstreckenden Steges (25) der Halterung (20) mit einem vorstehenden Zapfen (27) verbunden ist, der in ein entsprechend kreisbogenförmig ausgebildetes Langloch (28) in der Rückwand (24) eingreift, wobei die Enden des Langloches (28) als Anschläge für den Zapfen (27) zur Begrenzung der Schwenkbewegung der Bildschirmröhre (6) dienen.

9. Video-Spielgerät nach einem der Ansprüche 1 bis 8, dadurch gekennzeichnet, daß der Boden (4) des Gestells (5) auf einer in Richtung der Drehachse (7) der Bildschirmröhre (6) verlaufenden, selbsthemmenden Wippe (2) befestigt ist.

10. Video-Spielgerät nach Anspruch 9, dadurch gekennzeichnet, daß die Wippe (2) horizontal schwergängig verdrehbar ist.

## Claims

1. Video gaming machine, having a monitor tube (6), which is mounted so as to be rotatable through 90° relative to the visual display having a vertical or horizontal format, and which tube is controllable by a gaming board, the monitor tube (6) being secured in the image plane in a pivotable support (19), which is supported externally on a driving roller (18), which is driven by a drive motor (8) or by a manual drive, characterised in that the support (19) of the monitor tube (6) is quarter-circular and is displaceable in respect of its inclination relative to the vertical and/or is horizontally rotatable.

2. Video gaming machine according to claim 1, characterised in that the ends of the quarter-circular support (19) are connected to a multiply angled holder (20), which extends over the depth of the monitor tube (6) and is mounted in a stationary bearing (21) lying in the axis of rotation (7) of the monitor tube (6).

3. Video gaming machine according to claims 1 and 2, characterised in that an angle-ended supporting lug (34), which extends over the associated edge length of the monitor tube (6), is mounted on each of the webs (29, 30) of the holder (20) extending from the inside of the support (19).

4. Video gaming machine according to claim 3, characterised in that the receiving width of the supporting lugs (34) is variable for the monitor tube (6).

5. Video gaming machine according to one of claims 1 to 4, characterised in that a plurality of adjacent driving rollers (18) are non-rotatably disposed on a common shaft (13), on which a toothed wheel (12) sits, which wheel engages with a pinion (11) secured on the shaft of the drive motor (8).

6. Video gaming machine according to one of claims 1 to 5, characterised in that the support (19), which receives the monitor tube (6), is accommodated with its holder (20) and its drive unit in a housing-like frame (5).

7. Video gaming machine according to one of claims 1 to 6, characterised in that the web (26) of the holder (20), which web extends parallel to the rear side of the monitor tube (6), carries a bearing pin (23), which is disposed in the axis of rotation (7) of the monitor tube (6) and engages in the bearing (21) attached to the rear wall (24) of the frame (5).

8. Video gaming machine according to one of claims 1 to 7, characterised in that the portion (26) of a web (25) of the holder (20) is connected to a protruding pin (27), which engages in a correspondingly arcuate elongate slot (28) in the rear wall (24), said portion extending parallel to the rear wall (24) of the frame (5), and said web extending from the region of the bearing (21) to the support (19), the ends of the elongate slot (28) serving as stop members for the pin (27) to define the pivotal movement of the monitor tube (6).

9. Video gaming machine according to one of claims 1 to 8, characterised in that the base (4) of the frame (5) is secured on a self-locking rocker (2), which extends in the direction of the axis of rotation (7) of the monitor tube (6).

10. Video gaming machine according to claim 9, characterised in that the rocker (2) is tightly rotatable horizontally.

## Revendications

1. Appareil de jeu vidéo avec un tube cathodique (6) maintenu tournant de 90° pour la représentation d'images en format vertical ou transversal, qui est commandable au moyen d'une platine de jeu, le tube cathodique (6) étant fixé dans le plan de l'image dans un support pivotable (19), qui prend appui, sur le côté extérieur, sur un rouleau moteur (18) entraîné au moyen d'un moteur d'entraînement (8) ou d'un entraînement manuel, caractérisé en ce que le support (19) du tube cathodique (6) est en forme de quart de cercle et est réglable dans son inclinaison par rapport à la verticale et/ou peut tourner horizontalement.

2. Appareil de jeu vidéo selon la revendication 1, caractérisé en ce que les extrémités du support (19) en forme de quart de cercle sont reliées à une fixation (20), coudée plusieurs fois, s'étendant sur la profondeur du tube cathodique (6), laquelle est montée dans un palier (21) fixe, se situant dans l'axe de rotation (7) du tube cathodique (6).

3. Appareil de jeu vidéo selon les revendications 1 et 2, caractérisé en ce que sur chacune des entretoises (29, 30), partant du côté intérieur du support (19), de la fixation (20), est fixée une attache de support (34), coudée côté extrémité, s'étendant sur la longueur correspondante des bords du tube cathodique (6).

4. Appareil de jeu vidéo selon la revendication 3, caractérisé en ce que la largeur de réception des attaches de support (34) pour le tube cathodique (6) est variable.

5. Appareil de jeu vidéo selon l'une des revendications 1 à 4, caractérisé en ce que plusieurs rouleaux moteurs (18) juxtaposés sont placés solidairement en rotation sur un arbre (13) commun, sur lequel est calée une roue dentée (12), qui s'engrène avec un pignon (11) fixé sur l'arbre du moteur d'entraînement (8).

6. Appareil de jeu vidéo selon l'une des revendications 1 à 5, caractérisé en ce que le support (19) recevant le tube cathodique (6) avec sa fixation (20) et son unité d'entraînement est logé dans un bâti (5) côté boîtier.

7. Appareil de jeu vidéo selon l'une des revendications 1 à 6, caractérisé en ce que l'entretoise (26), s'étendant parallèlement à la face arrière du tube cathodique (6), de la fixation (20), porte un tourillon (23), placé dans l'axe de rotation (7) du tube cathodique (6), qui s'engage dans le palier (21), placé sur la paroi arrière (24) du bâti (5).

8. Appareil de jeu vidéo selon l'une des revendications 1 à 7, caractérisé en ce que la portion (26), s'étendant parallèlement à la paroi arrière (24) du bâti (5), d'une entretoise (25), s'étendant à partir de la zone du palier (21) vers le support (19), de la fixation (20), est reliée à un téton (27) saillant, qui s'engage dans un trou oblong (28), conformé en correspondance en arc de cercle, dans la paroi arrière (24), les extrémités du trou oblong (28) servant de butées au téton (27) pour limiter le mouvement de pivotement du tube cathodique (6).

9. Appareil de jeu vidéo selon l'une des revendications 1 à 8, caractérisé en ce que le fond (4) du bâti (5) est fixé sur une bascule (2) autobloquante, s'étendant dans la direction de l'axe de rotation (7) du tube cathodique (6).

10. Appareil de jeu vidéo selon la revendication 9, caractérisé en ce que la bascule (2) peut difficilement tourner horizontalement.
